# EUROPEAN PATENT SPECIFICATION

(11) **EP 0 679 455 B1**
(45) Date of publication and mention of the grant of the patent: **23.09.1998**
(21) Application number: 95200956.1
(22) Date of filing: 15.04.1995
(51) Int. Cl.: B21D 5/04

(54) **Auxiliary machining device, particularly partial bending and shearing in a programmmable sheet bending brake**
Zusatzbearbeitungseinrichtung, insbesondere zum teilweise Biegen und Schneiden in einer Abkantpresse
Dispositif d'usinage auxiliaire, en particulier de cintrage partiel et de cisaillage dans une presse-plieuse programmable

(30) Priority: 22.04.1994 IT MI940781
(43) Date of publication of application: 02.11.1995
(73) Proprietor: SALVAGNINI ITALIA S.p.A., I-36040 Sarego (Vicenza) (IT)
(72) Inventor: Venturini, Gianfranco, I-37044 Cologna Veneta (Verona) (IT)
(74) Representative: Marchi, Massimo, Dr.

(56) References cited:
- EP-A- 0 023 894
- DE-A- 3 530 513
- DE-A- 3 605 815
- FR-A- 2 650 770
- GB-A- 2 070 477
- US-A- 4 532 792

## Description

The present invention relates to a machine for the programmable bending of polygonal sheets of metal, and for auxiliary machinings, particularly partial bending and shearing of the sheets according to the preamble of claim 1.

The sheet metal is originally available in strips wound in coils. According to the quantity of like pieces that it is required to manufacture with the sheet metal, the transformation process is different. If the quantity of like pieces to be produced one after the other is relatively small, and this is the case to which the present invention refers, the first operation of the transformation process is the transversal division of the strip into sheets of the maximum length compatible with the method of transport and with the dimensions of the machines that continue the transformation process.

The length of the sheets that are obtained from the strip with the first shear is selected as long as possible so as to constrain the subsequent shears as little as possible and to allow each sheet to be subdivided with a minimum of scrap.

In order to facilitate the handling of the small pieces and in any case to reduce the machining time, it is convenient to postpone the subdivision of the sheet into several parts, that is achieved by shearing, until after the execution of operations such as punching and bending, that take advantage of the large dimensions of the sheet.

Programmable punching/shearing machines are known, that automatically produce variously drilled and shaped flat pieces of sheet metal, by first executing punchings on the large sheet and then cutting it into pieces with a minimum of scrap.

Programmable bending and panelling machines also exist, that automatically produce only one piece of sheet metal at a time, variously bent, that receive a flat sheet at inlet, possibly already punched, from which they subtract no material. Machines of this type are described in the patents US-A-4 242 898 and EP-A-0 023 894.

These machines are provided with tools that allow the sheet to be bent along the entire length of its sides, but they do not allow machinings such as the partial bending of portions of the sides and shearing to be carried out.

Lastly, machines have been accomplished that have the possibility of carrying out partial bendings of the sides of the sheets, but they use different tools (auxiliary bending blades) for each different partial bending angle and for each thickness of sheet metal.

The main object of the present invention is that of accomplishing a machine that, in addition to executing in a programmable manner several bends with any positive or negative inclination on each of the sides of a metal sheet, can also carry out diversified auxiliary machinings on said sheets.

Another object of the present invention is that of accomplishing a machine that executes in a programmable manner several bends with any positive or negative inclination on portions of each side of a sheet, leaving the rest of it undeformed.

A further object of the present invention is that of accomplishing a machine that executes in a programmable and automatic manner several bends with any positive or negative inclination on each of the sides of a metal sheet and that can separate from the sheet, by shearing, edges variously bent along the sides.

The abovementioned objects are attained, according to the invention, by a machine for the programmable bending of polygonal sheets of metal and for auxiliary machinings, particularly partial bending and shearing of the sheets, comprising a supporting structure having a substantially C-shaped transversal cross-section, a fixed lower counterblade and an upper blank holder vertically movable, both supported by said structure, a blade holder having a substantially C-shaped transversal cross-section, in turn vertically movably supported by said supporting structure, at least one main bending blade rotatably supported by said blade holder and co-operating with said counterblade and said blank holder for bending said sheets of metal along a predetermined line of bending and transfer means apt to bring, on command, at least one auxiliary tool in engagement with said main blade to perform auxiliary machinings on said sheets of metal, characterized in that said transfer means are provided with actuating means capable of driving movements of said auxiliary tool substantially parallel to the plane of said sheet and perpendicular to said line of bending. Preferred embodiments of the machine according to the invention are defined in the dependent claims.

The auxiliary tool can be a blade for the partial bending of portions of each side of a sheet or a blade for shearing variously bent edges of the sides of said sheets.

The present invention introduces important improvements into the technology of sheet metal machining, because it gives maximum flexibility to automatic and programmable machines for bending metal sheets. In fact a single machine is used to carry out one and/or the other type of machining: complete bending of the sides of the sheet, any partial bendings, production of panels or of sections with the same machine, automatic adjustment to the type of sheet metal.

The features of the present invention will be made more evident by the following description of an embodiment thereof, illustrated as an example, in the enclosed drawings, wherein:
Fig. 1 is a side view of a machine for bending sheets of metal, accomplished according to an embodiment of the invention;
Fig. 2 is a vertical cross-sectional view of a lower main blade of the machine of Fig. 1 and of positioning means of the same in an at rest position;
Fg. 3 is a vertical cross-sectional view of the lower main blade and of driving means of its bending motion;
Fig. 4 is a partial plan view of a blade holder, of wedge-shaped spacers and of the lower main blade of the machine of Fig. 1;
Fig. 5 is a front view of a blade holder of the bending machine of Fig. 1, wherein the set of transfer units of auxiliary bending blades and shearing blades is seen;
Fig. 6 is a vertical cross-sectional view of the lower main blade with an auxiliary partial bending blade and of driving means of its bending motion;
Fig. 7 is a vertical cross-sectional view of the lower main blade with an auxiliary shearing blade, instead of that for bending of Fig. 6, and of driving means of its shearing motion;
Fig. 8 is a partial, plan, view of the blade holder with the auxiliary partial bending blade of Fig. 6;
Fig. 9 is a front view of the blade holder with the auxiliary shearing blade of Fig. 7 in an operating position;
Fig. 10 shows in detail driving devices of the transfer units of the auxiliary bending blades and of the shearing blades.

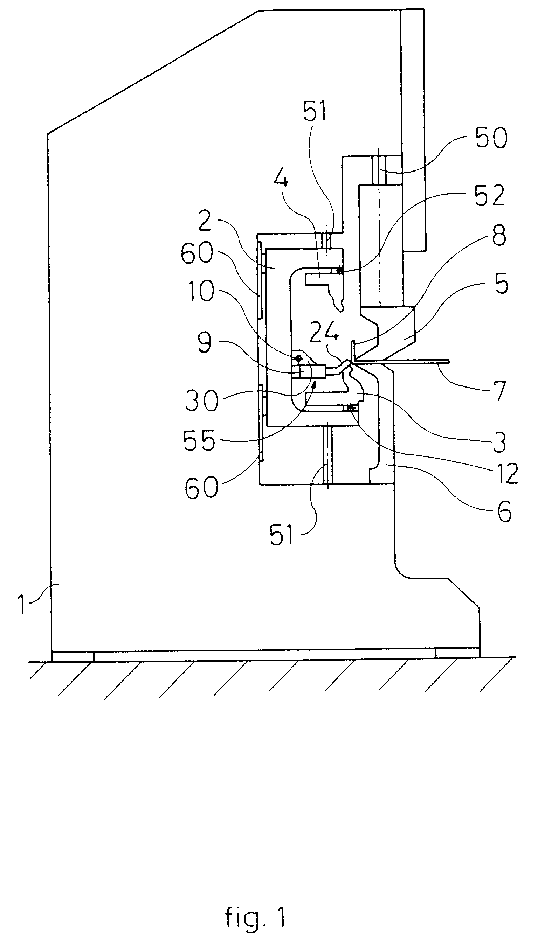

There is shown in Fig. 1 a programmable bending machine according to an embodiment of the invention comprising a base 1 having a substantially C-shaped transversal cross-section, provided with guides, not shown, wherein a stem of a piston 50 causes the vertical sliding motion of a blank holder 5, that, by pressing against a fixed counterblade 6, clamps a metal sheet 7 having a polygonal shape. One edge 8 of the sheet 7 has been bent along a line of bending defined by active edges of the counterblade 6 and of the blank holder 5. The base 1 is also provided with guides 60 on which further stems of pistons 51 cause the vertical sliding motion of a blade holder 2, also having a substantially C-shaped transversal cross-section. In the blade holder 2 there are rotatably supported, by means of a hinge 12, a lower main blade 3 and, by means of a hinge 52, an upper main blade 4, that are used for the programmable bending on all the sides of the sheets 7. The blade 4, above the sheet 7, generates downward bends, and the blade 3, below the sheet, generates upward bends. The two blades 3 and 4 are hinged on the blade holder 2 with the axis parallel to the line of bending of the sheet 7 and, together with the blade holder, they perform a movement of translation in a direction orthogonal to the plane in which the undeformed metal sheet lies. With this first movement, one or the other blade, 3 or 4, engages with the edge 8 and carries out a bending with a preset angle along the entire length of one side of the sheet.

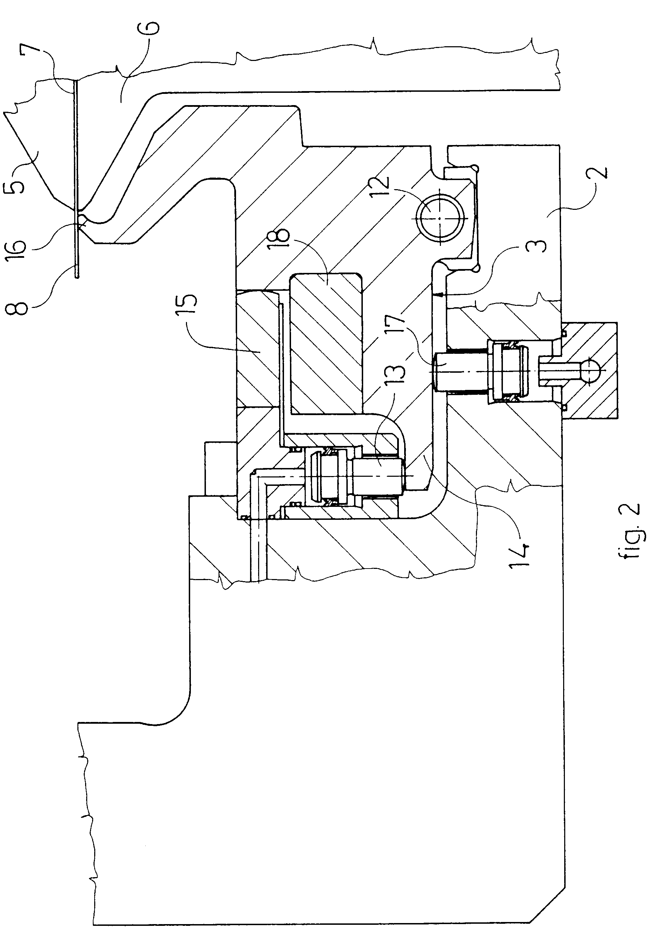

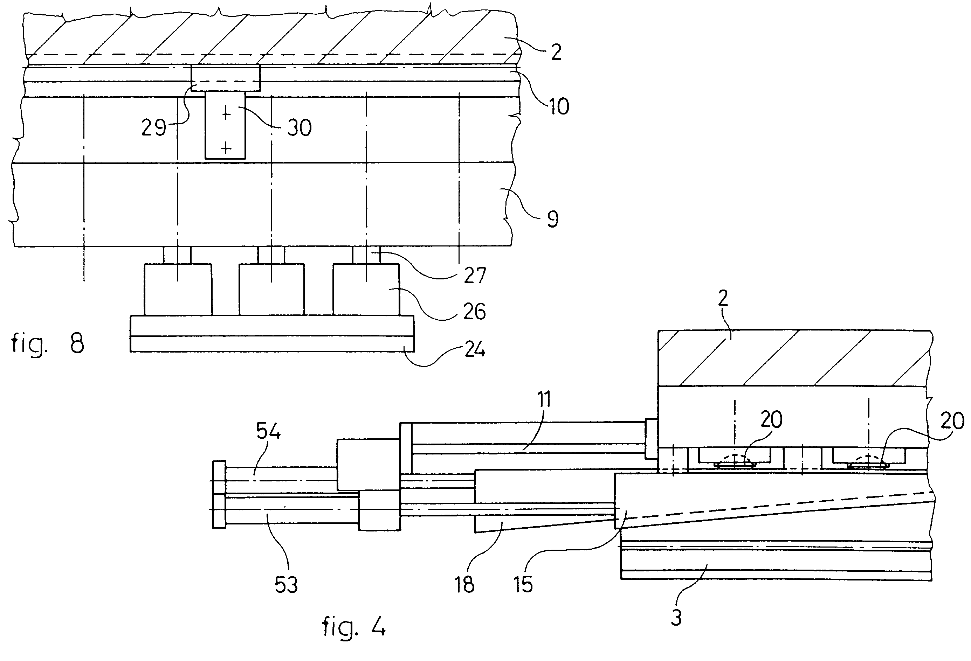

There is shown in Fig. 2 one of a series of simple-acting hydraulic cylinders 13 provided with pistons that, operating on a protrusion 14 of the lower main blade 3, keep the latter at rest against a wedge-shaped spacer 15, shown in Fig. 4 as well. An active edge 16 of the lower main blade 3 is thus at a predetermined distance from the active edges of the counterblade 6 and of the blank holder 5 depending on whether the wedge-shaped spacer 15 is inserted to a greater or lesser extent, by means of a double-acting longitudinal-positioning hydraulic cylinder 53 (Fig. 4). The initial angular position of the lower blade 3 is adjusted, in relation to the thickness of the metal sheet and of the radius of curvature that is desired along the bend, by means of the longitudinal displacement of the wedge-shaped spacer 15.

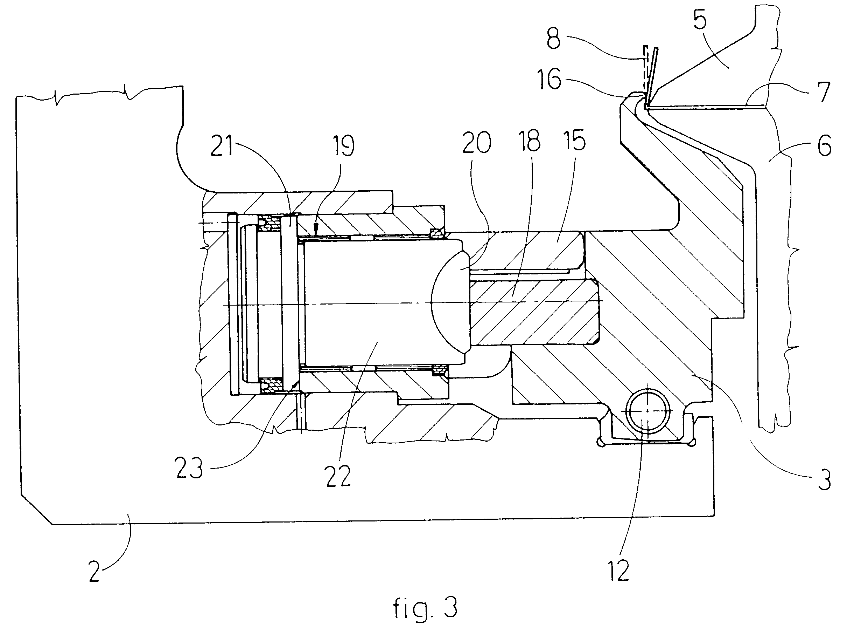

As shown in Figs. 3 and 4, a succession of simple-acting hydraulic cylinders 19 provided with pistons 22 operate, during the bending step, on the lower main blade 3 through a planar-spherical pad 20 and a wedge-shaped spacer 18, overcoming the action of the cylinders 13. The final angular position of the blade 3 and thus the angle of bending of the edge 8 depend on the longitudinal position of the wedge-shaped spacer 18. The cylinders 19 push the blade 3 against the edge 8 of the sheet 7, causing the edge of the blade to perform a motion that is almost parallel to the plane of the sheet. To this second movement of the blade 3 there corresponds a motion of rotation of the edge 8 around the line of bending and a further bend of the edge 8 along the entire length of one side of the sheet 8. The bending action of the edge 8 ends when expansions 21 of the pistons 22 of the cylinders 19 come against abutments 23. Then the cylinders 19 are discharged and the cylinders 13 take the blade 3 back to the initial position. The longitudinal position of the wedge-shaped spacer 18 is determined by a double-acting longitudinal-positioning hydraulic cylinder 54.

Pistons of a pair of single-acting hydraulic cylinders 17 cause the cylinders 13 to move back, after having been discharged, and separate the blade 3 from the wedge-shaped spacers 15 and 18, to allow the longitudinal displacement of the spacers themselves, without the resistance due to friction with the blade.

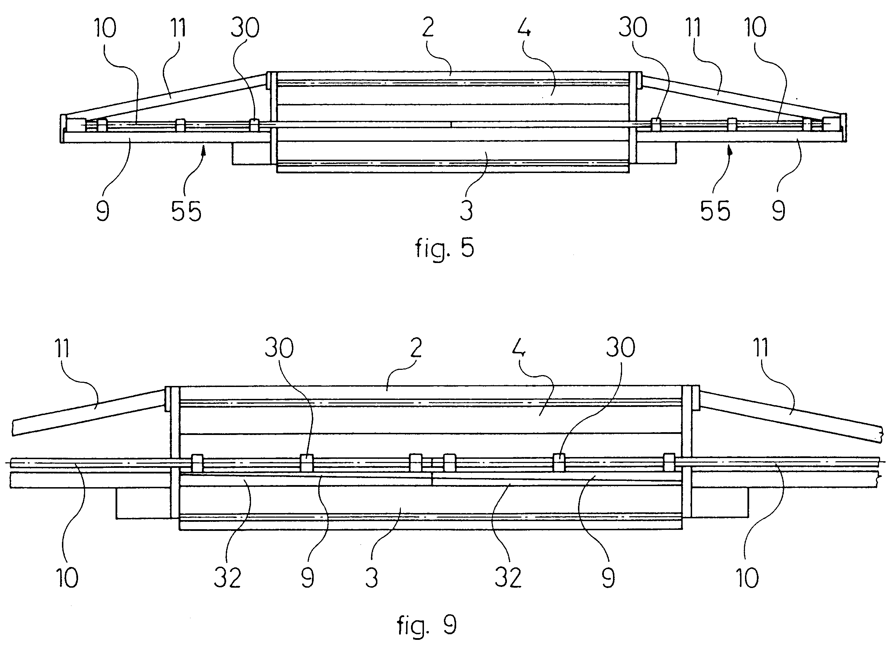

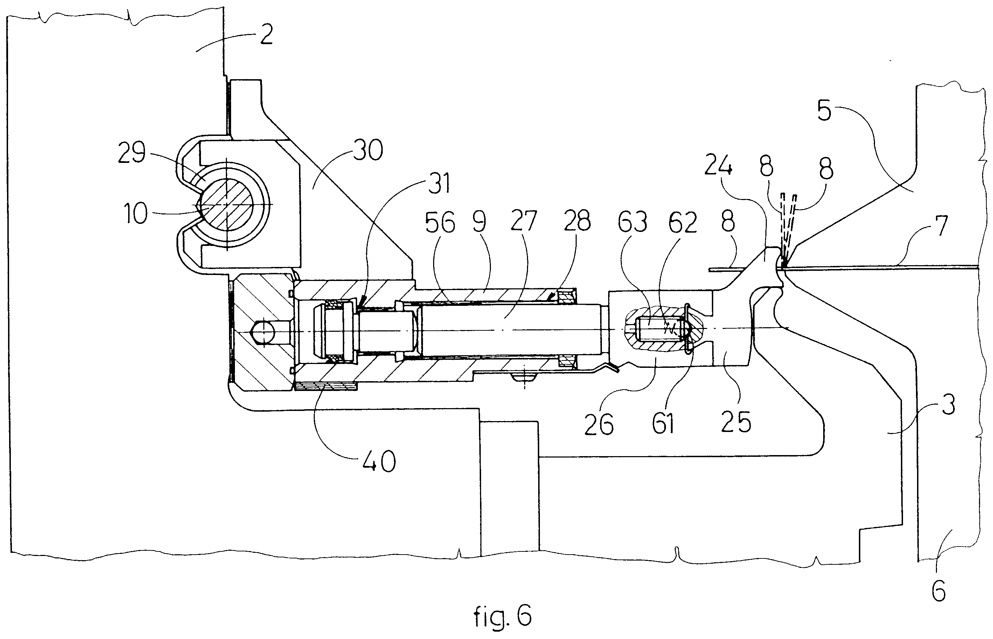

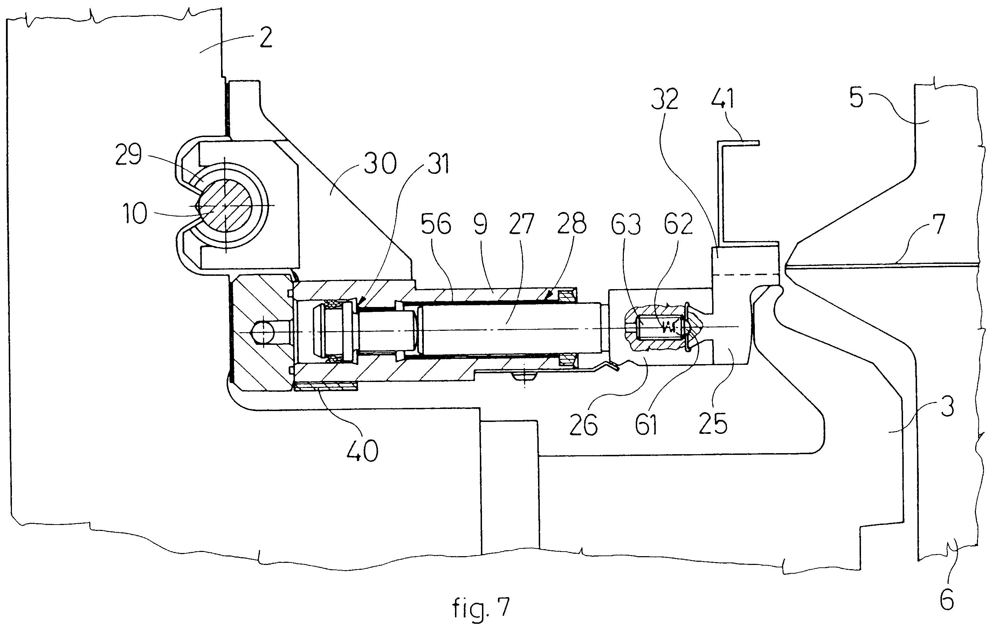

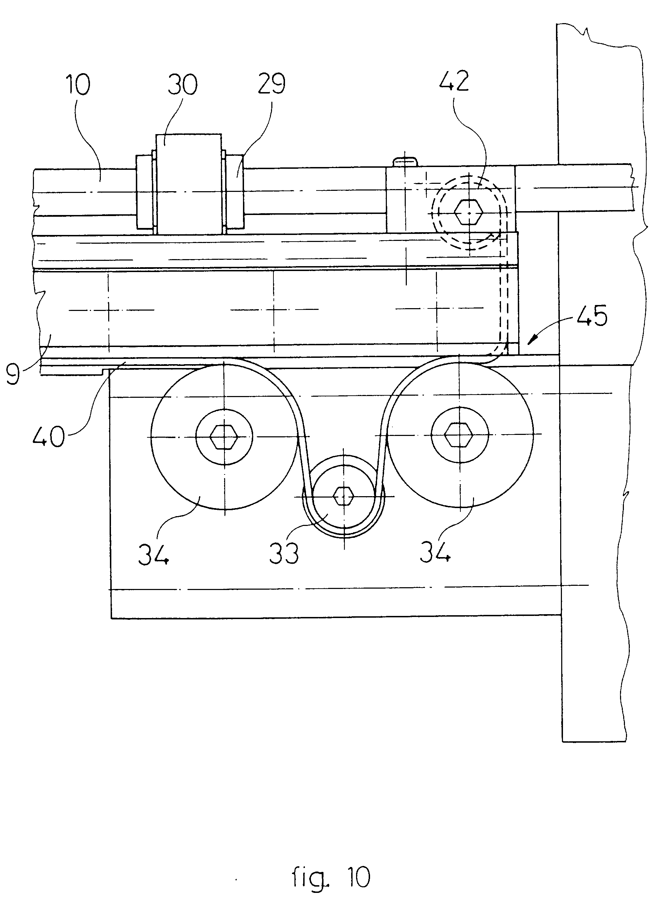

As shown in Figs. 1, 5, 6, 7, 8 and 9, transfer units 55 of auxiliary partial bending blades 24 or auxiliary shearing blades 32 are mounted in the blade holder 2. The transfer units 55 comprise two carriages 9 mounted at outer ends of the blade holder 2 by means of longitudinal guides 10, held by tie rods 11. The guides 10 extend from ends of the blade holder 2 toward the outside and toward the inside of the blade holder and slidably support the two carriages 9 by means of arms 30 and bushes 29. The transfer units introduce the auxiliary blades 24 or 32 in the blade holder 2, in an operating position, displacing the carriages 9 from an inoperative position, shown in Fig. 5, to an operating position, shown in Fig. 9. Each auxiliary blade 24, that is as long as the partial bend to be executed, is mounted in a separable manner on its respective carriage 9 by means of a dovetail coupling 25, balls 61, springs 62, threaded dowels 63 and a certain number of supports 26, visible in Figs. 6 and 7. The supports 26 extend with stems 27, sealingly slidable in holes 56 of the respective carriage 9. Coaxial with each stem 27 in the carriage 9 there is a simple-acting hydraulic cylinder 31. Not all the cylinders 31 in the carriage 9 are always opposite a stem 27, but only those that are in correspondence of an auxiliary blade 24.

There is shown in Fig. 7 an auxiliary shearing blade 32, formed by two parts, that are mounted in the carriages 9 to replace the blades 24. The blade 32 is as long as the blank holder 5, as shown in Fig. 9, where the blade is in an operating condition, and it has its upper edge inclined from one side to the other of the machine. The blade 32 thus engages all the cylinders 31.

There is shown in Fig. 10 a control device 45 of a carriage 9 comprising a toothed belt 40 that has ends integral with ends 42 of the carriage 9 and which is wound on a toothed pinion 33 and on the two idle and smooth pulleys 34. The pinion 33 is moved by an electric motor, not shown, and its motion is numerically controlled so that the auxiliary blade 24 or the shearing blade 32, mounted on the carriage 9, is at a suitable moment brought to the operating condition inside the blade holder 2 to perform its work. The mechanism shown in Fig. 10 is repeated symmetrically at the other end of the blade holder 2.

When the machine forming the object of the present invention has to bend the edge 8 along its entire length, the transfer units 55 of the auxiliary blades do not intervene, that maintain the carriages 9 outside the blade holder 2. The wedge-shaped spacers 15 and 18, after displacement of the blade 3 by the cylinders 17, come to the positions corresponding to the start and the end, respectively, of the operating stroke of the blade 3. The blade holder 2 moves upward causing the active edge 16 of the blade 3 to interfere with the edge 8, which thus starts to be bent; the cylinders 19 push the blade 3 to the end of the bending stroke, while at the same time causing the cylinders 13 to move back and lastly the cylinders 13 cause the blade 3 to return to the initial position, while at the same time causing the cylinders 19 to move back. Thus, the blade 3 performs two distinct motions, that take place simultaneously or in succession, one of translation in a direction orthogonal to the plane in which the undeformed sheet metal 7 lies, thus vertical, and one of rotation around the hinge 12 parallel to the line of bending, to which there corresponds a motion of the edge of the blade that is almost parallel to said plane.

The upper bending blade 4, except for the edge that comes into contact with the sheet metal 7, is symmetrical with respect to a median plane parallel to the plane of the undeformed sheet metal 7 and executes symmetrical movements under the control of means similar to those just described for the lower blade 3.

By means of the blade 3, or the blade 4, the machine bends the entire edge 8 of the sheet 7 through an angle and with a radius that are programmable (programmable by means of the displacements of the two wedge-shaped spacers 15 and 18). The edge 8 cannot be bent partially with the blades 3 or 4, because they are continuous along the entire length of the counterblade and of the blank holder.

When the machine forming the object of the present invention is to bend upward some sections of one side of the sheet 7 and others are to remain undeformed, there is the intervention of the transfer units 55 of the auxiliary blades 24, previously mounted on the carriages 9 and made so as to operate only where required. The partial bending of portions of the edge 8 is achieved by introducing in the cavity of the blade holder 2 one or both the carriages 9 with one or more auxiliary bending blades 24 and placing the blades 24 against the active edge of the lower main blade 3, in correspondence of the portions of the edge to be bent, delimited by shears made previously. The auxiliary blades, being on board the blade holder 2 and resting against the lower main blade 3, move orthogonally to the plane of the undeformed sheet metal 7 and perform the first bending step, moved by the motion of the blade holder.

The second motion of the auxiliary blades 24, parallel to the plane of the undeformed sheet metal 7 and perpendicular to the line of bending already executed, is controlled by the hydraulic cylinders 31 incorporated in the carriages 9. The auxiliary blades 24 move relatively to the lower main blade 3 and the end of the operating stroke of these cylinders and thus the end of the bending step of the edge 8 takes place when the auxiliary blades 24 come to a stop against the blade 3, that resists the thrust, as it is held up against the wedge-shaped spacer 15 by the hydraulic cylinders 13; the force of the cylinders 31 that urge the auxiliary blades 24 does not exceed, taking the levers into account, the force of the cylinders 13 that hold the lower main blade against the wedge-shaped spacer 15; in this way the position of the auxiliary blades 24 is well defined and parallel to the line of bending and the angle of bending is also well defined apart from the error depending on the variability of the spring-back of the sheet metal. The motion of the auxiliary blades 24 away from the sheet metal 7 is controlled by the pistons 13, that operate the main blade 3.

When lastly it is desired to produce pieces that are so narrow that they cannot be handled, because they are completely covered by the blank holder 5 during the bending operation, such as the so-called sections, the two parts of the shearing blade 32 are mounted on the transfer units 55 of the auxiliary blades and, after all the bends of the section have been executed, the finished piece 41 is separated with a shearing stroke from the rest of the sheet metal 7, on which a series of bends and a shear continue then to be performed, repeatedly. The same carriages 9 carry the two parts of the shearing blade 32, having overall length equal to that of the blade holder 2, in an operating position to rest against the lower main blade 3. The blade 32 operates in co-operation with the blank holder 5, if this has a sharp edge, or with other means equivalent to the blank holder, in the opposite case, to shear an edge of the sheet 7, after bending, by exploiting the motion of the blade holder 2 as a shearing motion.

With the object of reducing the shearing burr, the adjustment of the clearance between the shearing blade 32 and the blank holder 5, or a replacement thereof with a sharp edge, is performed by setting the position of the lower main blade 3 by means of the wedge-shaped spacer 15 and keeping the blade 32 urged by the hydraulic cylinders 31 up against the main blade 3.

In the same way as the lower blade 3, the upper blade 4 can also participate in auxiliary operations of the machine to execute partial downward bends.

## Claims

1. Machine for the programmable bending of polygonal sheets of metal (7) and for auxiliary machinings, particularly partial bending and shearing of the sheets (7), comprising a supporting structure (1) having a substantially C-shaped transversal cross-section, a fixed lower counterblade (6) and an upper blank holder (5) vertically movable, both supported by said structure (1), a blade holder (2) having a substantially C-shaped transversal cross-section, in turn vertically movably supported by said supporting structure (1), at least one main bending blade (3, 4) rotatably supported by said blade holder (2) and co-operating with said counterblade (6) and said blank holder (5) for bending said sheets of metal (7) along a predetermined line of bending and transfer means (55) apt to bring, on command, at least one auxiliary tool (24; 32) in engagement with said main blade (3, 4) to perform auxiliary machinings on said sheets of metal (7), characterized in that said transfer means (55) are provided with actuating means (31) capable of driving movements of said auxiliary tool (24; 32) substantially parallel to the plane of said sheet (7) and perpendicular to said line of bending.

2. Machine according to claim 1, characterized in that said transfer means (55) comprise at least one carriage (9) longitudinally movably supported by said blade holder (2) and operationally connected to control devices (45) apt to displace said carriage (9) from an inoperative position, outside said blade holder (2), to an operative position, inside said blade holder (2), wherein said auxiliary tool (24; 32) is in engagement with said main blade (3, 4) to perform said auxiliary machinings.

3. Machine according to claim 2, characterized in that said transfer means (55) comprise two carriages (9) slidably mounted by means of arms (30) and bushes (29) on longitudinal guides (10) that extend from ends of said blade holder (2) toward the outside and toward the inside of the blade holder (2).

4. Machine according to claim 1, characterized in that said auxiliary tool (24; 32) is operationally connected to said actuating means (31) by means of separable connecting means (25, 26).

5. Machine according to claim 1, characterized in that said auxiliary tool (24; 32) is separably fastened to a movable support (27) driven by said actuating means (31).

6. Machine according to claim 1, characterized in that said actuating means (31) are constituted by first hydraulic cylinders (31) drivable to urge said auxiliary tool (24; 32) toward said line of bending of the sheet metal.

7. Machine according to claim 1, characterized in that said main blade (3, 4) is vertically movable together with said blade holder (2) to perform a bending along the entire length of the sides of said sheet (7) and is engaged with second, third and fourth hydraulic cylinders (13, 19, 17), said second cylinders (13) operating on a protrusion (14) of said blade (3, 4) and keeping the blade (3, 4) against a first wedge-shaped spacer (15) in an initial angular position, said third cylinders (19) operating on the blade (3, 4) by means of a second wedge-shaped spacer (18) to cause it to rotate around said hinge (12) to a final angular position and to perform a further bending along the entire length of said sides, said fourth cylinders (17) operating on said blade (3, 4) to separate it from said wedge-shaped spacers (15, 18) and to allow the adjustment of the longitudinal position of said spacers (15, 18).

8. Machine according to claim 1, characterized in that said auxiliary tool (24; 32) is constituted by a blade (24) for the partial bending of portions of each side of a sheet (7) that, in an operative position, rests against the main blade (3, 4) and moves orthogonally to the plane of the undeformed metal sheet (7), moved by the vertical motion of the blade holder (2), to perform a first bending of said edge (8) with a preset angle.

9. Machine according to claim 8, characterized in that said partial bending blade (24) is slidably mounted in a respective carriage (9) by means of dovetail couplings (25) and supports (26) provided with stems (27) slidable in holes (56) of said carriage (9), said stems (27) being operated by a respective simple-acting hydraulic cylinder (31), that controls movements of said auxiliary blade (24) substantially parallel to the plane of said sheet (7) and perpendicular to said line of bending to perform a further bending operation of said edge (8).

10. Machine according to claim 1, characterized in that said auxiliary tool (24; 32) is constituted by parts of a blade (32) for shearing variously bent edges (41) of the sides of said sheets (7) that, in an operative position, rest against the main blade (3, 4) and move orthogonally to the plane of the undeformed metal sheet (7), moved by the vertical motion of the blade holder (2), to perform said shearing operation.

11. Machine according to claim 10, characterized in that said shearing blade (32) is slidably mounted in a respective carriage (9) by means of dovetail couplings (25) and supports (26) provided with stems (27) slidable in holes (56) of said carriage (9), said stems (27) being in engagement with a respective simple-acting hydraulic cylinder (31), that, with a motion substantially parallel to the plane of said sheet (7) and perpendicular to said line of bending, allows said auxiliary blade (32) to approach to the main blade (3, 4) for adapting to the thickness of the sheet metal the clearance between said shearing blade (32) and said blank holder (5).

12. Machine according to claim 2, characterized in that said transfer means (55) comprise at least one control device (45) of said carriage (9), comprising in turn a toothed belt (40) having ends integral with ends (42) of the carriage (9), that is wound on a toothed pinion (33) and on two idle and smooth pulleys (34), said pinion (33) being driven by an electric motor to bring at least one auxiliary tool (24; 32) from said inoperative position to said operative position.

## Patentansprüche

1. Maschine zum programmierbaren Biegen vieleckiger Bleche (7) und für Zusatzbearbeitungen, insbesondere teilweises Biegen und Schneiden der Bleche (7), mit einer Stützkonstruktion (1) mit einem im wesentlichen C-förmigen Querschnitt, einer festen unteren Gegenklinge (6) und einem oberen Platinenhalter (5), der vertikal beweglich ist, und die beide durch die Konstruktion (1) getragen werden, einem Klingenhalter (2) mit einem im wesentlichen C-förmigen Querschnitt, der seinerseits vertikal beweglich durch die Stützkonstruktion (1) gelagert ist, wenigstens einer Hauptbiegeklinge (3, 4), die drehbar durch den Klingenhalter (2) gelagert ist und mit der Gegenklinge (6) und dem Platinenhalter (5) zum Biegen der Bleche (7) entlang einer vorbestimmten Biegelinie zusammenwirkt, und Übertragungseinrichtungen (55), die zum Bringen wenigstens eines Zusatzwerkzeugs (24; 32) auf Befehl in Eingriff mit der Hauptklinge (3, 4) zur Durchführung von Zusatzbearbeitungen an den Blechen (7) geeignet sind, **dadurch gekennzeichnet**, daß die Übertragungseinrichtungen (55) mit Betätigungseinrichtungen (31) versehen sind, die zu Antriebsbewegungen des Hilfswerkzeugs (24; 32) im wesentlichen parallel zu der Ebene des Blechs (7) und senkrecht zu der Biegelinie in der Lage sind.

2. Maschine nach Anspruch 1, **dadurch gekennzeichnet**, daß die Übertragungseinrichtungen (55) wenigstens einen Schlitten (9) aufweisen, der längsbeweglich durch den Klingenhalter (2) gelagert ist, und treibend mit Steuerungsvorrichtungen (45) verbunden ist, die den Schlitten (9) von einer Nicht-Betriebsstellung außerhalb des Klingenhalters (2) zu einer Betriebsstellung innerhalb des Klingenhalters (2) versetzen können, wobei das Zusatzwerkzeug (24; 32) sich in Eingriff mit der Hauptklinge (3, 4) zur Durchführung der Zusatzbearbeitungen befindet.

3. Maschine nach Anspruch 2, **dadurch gekennzeichnet**, daß die Übertragungseinrichtungen (55) zwei Schlitten (9) aufweisen, die gleitbar mittels Armen (30) und Hülsen (29) an Längsführungen (10) angebracht sind, die sich von Enden des Klingenhalters (2) in Richtung der Außenseite und in Richtung der Innenseite des Klingenhalters (2) erstrecken.

4. Maschine nach Anspruch 1, **dadurch gekennzeichnet**, daß das Zusatzwerkzeug (24; 32) treibend mit der Betätigungseinrichtungen (31) mittels trennbarer Verbindungseinrichtungen (25, 26) verbunden ist.

5. Maschine nach Anspruch 1, **dadurch gekennzeichnet**, daß das Zusatzwerkzeug (24; 32) trennbar an eine bewegliche Lagerung (27) befestigt ist, die durch die Betätigungseinrichtungen (31) angetrieben wird.

6. Maschine nach Anspruch 1, **dadurch gekennzeichnet**, daß die Betätigungseinrichtungen (31) aus ersten hydraulischen Zylindern (31) bestehen, die derart antreibbar sind, daß sie das Zusatzwerkzeug (24; 32) in Richtung der Biegelinie des Blechs zwingen.

7. Maschine nach Anspruch 1, **dadurch gekennzeichnet**, daß die Hauptklinge (3, 4) vertikal zusammen mit dem Klingenhalter (2) zur Durchführung einer Biegung entlang der gesamten Länge der Seiten des Blechs (7) beweglich ist und mit zweiten, dritten und vierten hydraulischen Zylindern (13, 19, 17) in Eingriff ist, wobei die zweiten Zylinder (13) auf einen Vorsprung (14) der Klinge (3, 4) wirken und die Klinge (3, 4) gegen einen ersten keilförmigen Abstandshalter (15) in einer Anfangs-Winkelstellung halten, wobei die dritten Zylinder (19) auf die Klinge (3, 4) und mittels eines zweiten keilförmigen Abstandshalters (18) derart wirken, daß bewirkt wird, daß sich diese um das Scharnier (12) zu einer End-Winkelstellung dreht und eine weitere Biegung entlang der gesamten Länge der Seiten durchführt, wobei die vierten Zylinder (17) auf die Klinge (3, 4) derart wirken, daß diese von den keilförmigen Abstandshaltern (15, 18) getrennt wird, und die Anpassung der Längsstellung der Abstandshalter (15, 18) zugelassen wird.

8. Maschine nach Anspruch 1, **dadurch gekennzeichnet**, daß das Zusatzwerkzeug (24; 32) durch eine Klinge (24) für das teilweise Biegen von Abschnitten einer jeden Seite eines Blechs (7) gebildet wird, die in einer Betriebsstellung gegen die Hauptklinge (3, 4) ruht und sich orthogonal zu der Ebene des nicht-verformten Blechs (7) bewegt, wobei sie durch die vertikale Bewegung des Klingenhalters (2) derart bewegt wird, daß sie eine erste Biegung des Randes (8) mit einem vorbestimmten Winkel durchführt.

9. Maschine nach Anspruch 8, **dadurch gekennzeichnet**, daß die Teil-Biegeklinge (24) gleitbar in einem jeweiligen Schlitten (9) mittels Schwalbenschwanzkupplungen (25) und Lagern (26) angebracht ist, die mit Stämmen (27) versehen sind, die in Öffnungen (56) des Schlittens (9) gleitbar sind, wobei die Stämme (27) durch einen jeweiligen einfach wirkenden hydraulischen Zylinder (31) betätigt werden, der die Bewegungen der Zusatzklinge (24) im wesentlichen parallel zu der Ebene des Blechs (7) und senkrecht zu der Biegelinie steuert, um eine weitere Biegeoperation des Randes (8) durchzuführen.

10. Maschine nach Anspruch 1, **dadurch gekennzeichnet**, daß das Zusatzwerkzeug (24; 32) durch Teile einer Klinge (32) zum Schneiden verschiedentlich gebogener Ränder (41) der Seiten des Blechs (7) gebildet wird, die in einer Betriebsstellung gegen die Hauptklinge (3, 4) ruht und sich orthogonal zu der Ebene des nicht-verformten Blechs (7) bewegt, wobei sie durch die vertikale Bewegung des Klingenhalters (2) bewegt wird, um die Schneidoperation durchzuführen.

11. Maschine nach Anspruch 10, **dadurch gekennzeichnet**, daß die Schneidklinge (32) gleitbar in einem jeweiligen Schlitten (9) mittels Schwalbenschwanzkupplungen (25) und Lagern (26) angebracht ist, die mit Stämmen (27) versehen sind, die in Öffnungen (56) des Schlittens (9) gleitbar sind, wobei sich die Stämme (27) in Eingriff mit einem jeweiligen einfach wirkenden hydraulischen Zylinder (31) befinden, der mit einer Bewegung im wesentlichen parallel zu der Ebene des Blechs (7) und senkrecht zu der Biegelinie gestattet, daß sich die Zusatzklinge (32) der Hauptklinge (3, 4) zum Anpassen des Zwischenraums zwischen der Schneidklinge (32) und dem Platinenhalter (5) an die Dicke des Blechs annähert.

12. Maschine nach Anspruch 2, **dadurch gekennzeichnet**, daß die Übertragungseinrichtungen (55) wenigstens eine Steuerungsvorrichtung (45) des Schlittens (9) aufweisen, die ihrerseits einen Zahnriemen (40) mit Enden integral mit den Enden (42) des Schlittens (9) ausgebildet aufweisen, der auf ein Zahnritzel (33) und zwei freilaufende und glatte Riemenscheiben (34) gewunden ist, wobei das Ritzel (33) durch einen elektrischen Motor angetrieben wird, um wenigstens ein Zusatzwerkzeug (24; 32) von der Nichtbetriebsstellung zu einer Betriebsstellung zu bringen.

## Revendications

1. Machine pour le pliage programmable de tôles polygonales (7) et pour des usinages auxiliaires, en particulier un pliage partiel et un cisaillage des tôles (7), comportant une structure de support (1) ayant une section transversale sensiblement en forme de C, une contre-lame inférieure fixe (6) et un support de flan supérieur (5) verticalement mobile, les deux supportés par ladite structure (1), un porte-lame (2) ayant une section transversale sensiblement en forme de C, à son tour supporté de façon verticalement mobile par ladite structure de support (1), au moins une lame de pliage principale (3, 4) supportée de façon rotative par ledit porte-lame (2) et coopérant avec ladite contre-lame (6) et ledit support de flan (5) afin de plier lesdites tôles (7) le long d'une ligne prédéterminée de pliage et des moyens de transfert (55) capables d'amener, sur commande, au moins un, outil auxiliaire (24; 32) en engagement avec ladite lame principale (3, 4) afin de réaliser des usinages auxiliaires sur lesdites tôles (7), caractérisée en ce que lesdits moyens de transfert (55) sont pourvus de moyens d'actionnement (31) capables d'entraîner des mouvements dudit outil auxiliaire (24; 32) sensiblement parallèlement au plan de ladite tôle (7) et perpendiculairement à ladite ligne de pliage.

2. Machine selon la revendication 1, caractérisée en ce que lesdits moyens de transfert (55) comportent au moins un chariot (9) supporté de façon longitudinalement mobile par ledit porte-lame (2) et relié de manière opérationnelle à des dispositifs de commande (45) capables de déplacer ledit chariot (9) depuis une position inactive, à l'extérieur dudit porte-lame (2), jusqu'à une position active, à l'intérieur dudit porte-lame (2), ledit outil auxiliaire (24; 32) étant en engagement avec ladite lame principale (3, 4) afin de réaliser lesdits usinages auxiliaires.

3. Machine selon la revendication 2, caractérisée en ce que lesdits moyens de transfert (55) comportent deux chariots (9) montés de façon coulissante au moyen de bras (30) et de manchons (29) sur des guides longitudinaux (10) qui s'étendent depuis des extrémités dudit porte-lame (2) vers l'extérieur et vers l'intérieur du porte-lame (2).

4. Machine selon la revendication 1, caractérisée en ce que ledit outil auxiliaire (24; 32) est relié de manière opérationnelle aux dits moyens d'actionnement (31) à l'aide de moyens de connexion séparables (25, 26).

5. Machine selon la revendication 1, caractérisée en ce que ledit outil auxiliaire (24; 32) est fixé de façon séparable sur un support mobile (27) entraîné par lesdits moyens d'actionnement (31).

6. Machine selon la revendication 1, caractérisée en ce que lesdits moyens d'actionnement (31) sont constitués par des premiers vérins hydrauliques (31) pouvant être entraînés afin de pousser ledit outil auxiliaire (24; 32) vers ladite ligne de pliage de la tôle.

7. Machine selon la revendication 1, caractérisée en ce que ladite lame principale (3, 4) est verticalement mobile avec ledit porte-lame (2) afin de réaliser un pliage sur toute la longueur des côtés de ladite tôle (7) et est engagée avec des deuxièmes, troisièmes et quatrièmes vérins hydrauliques (13, 19, 17), lesdits deuxièmes vérins (13) agissant sur une saillie (14) de ladite lame (3, 4) et maintenant la lame (3, 4) contre une première entretoise en forme de coin (15) dans une position angulaire initiale, lesdits troisièmes vérins (19) agissant sur la lame (3, 4) au moyen d'une deuxième entretoise en forme de coin (18) afin de l'amener à tourner autour de ladite articulation (12) jusqu'à une position angulaire finale et à réaliser un autre pliage sur toute la longueur desdits côtés, lesdits quatrièmes vérins (17) agissant sur ladite lame (3, 4) afin de la séparer desdites entretoises en forme de coin (15, 18) et à permettre le réglage de la position longitudinale desdites entretoises (15, 18).

8. Machine selon la revendication 1, caractérisée en ce que ledit outil auxiliaire (24; 32) est constitué par une lame (24) pour le pliage partiel de chaque côté d'une tôle (7) qui, dans une position opérationnelle, repose contre la lame principale (3, 4) et se déplace perpendiculairement au plan de la tôle non déformée (7), déplacée par le mouvement vertical du porte-lame (2), afin de réaliser un premier pliage dudit bord (8) avec un angle prédéterminé.

9. Machine selon la revendication 8, caractérisé en ce que ladite lame de pliage partiel (24) est montée de façon coulissante dans un chariot (9) respectif au moyen d'accouplements à queue d'aronde (25) et de supports (26) pourvus de tiges (27) pouvant coulisser dans des trous (56) dudit chariot (9), lesdites tiges (27) étant actionnées par un vérin hydraulique à simple effet (31) respectif, qui commande des déplacements de ladite lame (24) sensiblement parallèlement au plan de ladite tôle (7) et perpendiculairement à ladite ligne de pliage afin de réaliser une autre opération de pliage dudit bord (8).

10. Machine selon la revendication 1, caractérisée en ce que ledit outil auxiliaire (24, 32) est constitué par des parties d'une lame (32) destinées à cisailler des bords pliés différemment (41) des côtés desdites tôles (7) qui, dans une position opérationnelle, reposent la lame principale (3, 4) et se déplacent perpendiculairement au plan de la tôle non déformée (7), déplacée par le mouvement vertical du porte-lame (2), afin de réaliser ladite opération de cisaillage.

11. Machine selon la revendication 10, caractérisée en ce que ladite lame de cisaillage (32) est montée de façon coulissante dans un chariot (9) respectif au moyen d'accouplements à queue d'aronde (25) et de supports (26) pourvus de tiges (27) pouvant coulisser dans des trous (56) dudit chariot (9), lesdites tiges (27) étant en engagement avec un vérin hydraulique à simple effet (31) respectif qui, avec un mouvement sensiblement parallèle au plan de ladite tôle (7) et perpendiculaire à ladite ligne de pliage, permet à ladite lame auxiliaire (32) de s'approcher de la lame principale (3, 4) afin d'adapter à l'épaisseur de la tôle le jeu entre la lame de cisaillage (32) et ledit support de flan (5).

12. Machine selon la revendication 2, caractérisée en ce que lesdites unités de transfert (55) comportent au moins un dispositif de commande (45) dudit chariot (9), comportant à son tour une courroie crantée (40) ayant des extrémités d'un seul tenant avec des extrémités (42) du chariot (9), qui est enroulée sur un pignon cranté (33) et sur deux poulies folles et lisses (34), ledit pignon (33) étant entraîné par un moteur électrique afin d'amener au moins un outil auxiliaire (24; 32) de' ladite position inactive vers ladite position active.
